# EUROPEAN PATENT APPLICATION

(11) **EP 2 869 424 A1**
(43) Date of publication of application: **06.05.2015**
(21) Application number: 13275261.9
(22) Date of filing: 29.10.2013
(51) Int. Cl.: H02J 3/32, H02J 7/34, H02J 3/38

(54) **Operating a microgrid**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is a modular, re-locatable microgrid (1) and a method of operating that microgrid (1). The method comprises providing a microgrid (1) comprising a power source module (2), a power storage module (6), and a load module (12). Each of the microgrid modules is located at a respective first location. The power storage module (6) is switchable between operating as a further power source and a power store. The power storage module (6) may receive power from the power source module (2). The load module (12) may receive power from the power source module (2) and the power storage module (6). The method further comprises disconnecting at least one module from the microgrid (1), thereby producing at least two sub-assemblies; moving the microgrid modules from the first locations to second locations that are different to the first locations; and re-connecting the sub-assemblies to produce a relocated microgrid (1).

## Description

### FIELD OF THE INVENTION

The present invention relates to the operation of a microgrid.

### BACKGROUND

A microgrid is a localized grouping of interconnected electricity generation modules and loads. Many microgrids also include energy storage modules. Typically, a microgrid has a clearly defined boundary outside which electricity is not distributed. Also, typically a microgrid acts as a separate controllable entity with respect to a larger electricity grid, or macrogrid (e.g. a national grid).

A microgrid can usually be connected and disconnected from a macrogrid to enable it to operate in either a "grid-connected mode" or a so-called "island-mode".

In a grid-connected mode, a microgrid may produce power that is fed into a macrogrid, or a microgrid may draw power from the macrogrid.

Within a microgrid that is isolated from a macrogrid, electrical power may be generated, stored, and used by loads without that microgrid feeding power into, or drawings power from, a macrogrid.

Typically, microgrids are permanent or semi-permanent installations. Thus, once set-up at a particular location, microgrids remain at that location.

### SUMMARY OF THE INVENTION

In a first aspect, the present invention provides a method of operating a microgrid. The method comprises providing a microgrid comprising a power source module, a power storage module, and a load module. Each of the microgrid modules is located at a respective first location, the power storage module is switchable between operating as a further power source and a power store, the power storage module is coupled to the power source module such that the power storage module may receive power from the power source module, and the load module is coupled to the power source module and the power storage module such that the load module may receive power from the power source module and the power storage module. The method further comprises: disconnecting at least one module from the microgrid, thereby producing at least two microgrid sub-assemblies; thereafter, moving each of the microgrid modules from the first location of that microgrid module to a respective second location, the second location for a microgrid module being different to the first location for that microgrid module; and, thereafter, re-connecting the at least two microgrid sub-assemblies so as to produce a relocated microgrid.

The provided microgrid may further comprise a management module coupled to the power source module, the power storage module, and the load module such that the management module may receive a signal from the power source module, the power storage module, and the load module. The step of moving may comprise moving at least the power source module, the power storage module, and the load module. The step of moving may comprise maintaining the location of the management module such that it remains at its first location. Alternatively, the step of moving may comprise moving the management module from a first location for the management module to a second location for the management module.

The step of disconnecting may include disconnecting each microgrid module from each other microgrid module.

The step of moving may comprise, for each microgrid module, coupling that microgrid module to a vehicle, and, for each microgrid module, transporting, using the vehicle to which that microgrid module is coupled, that microgrid module.

The method may further comprise, when the microgrid is in its initial and/or relocated state, controlling power distribution within the microgrid, wherein controlling power distribution within the microgrid comprises: providing, for use by the management module, one or more predefined modes of operation for the microgrid, a predefined mode of operation specifying an operational mode for one or more microgrid modules; receiving, by the management module, one or more signals, each of the received signals specifying an operational parameter of one or more of the microgrid modules; using the received one or more signals, selecting a predefined mode of operation for the microgrid; and, for each microgrid module for which an operational mode is specified in the selected predefined mode of operation, controlling that microgrid module such that it operates as specified by the selected predefined mode of operation.

The step of selecting may be performed by a processor of the management module.

The method may further comprise providing, for each predefined mode of operation for the microgrid, a set comprising one or more criteria. The step of selecting a predefined mode of operation for the microgrid may comprise identifying a set of criteria each criterion in which is satisfied by the received one or more signals, and selecting, as the selected predefined mode of operation, a predefined mode of operation that corresponds to the identified set of criteria.

The load module may comprise a plurality of loads. The method may further comprise, when the microgrid is in its initial and/or relocated state, controlling power distribution within the microgrid. Controlling power distribution within the microgrid may comprise: assigning, to each load, a priority value; receiving, by the management module, one or more signals, each of the received signals specifying operational parameters of one or more microgrid entities selected from the group of microgrid entities consisting of the power source module, the power storage module, and a load; and, for each load, controlling, by the management module, a power supply to that load based upon the priority value assigned to that load and based upon the received one or more signals.

The one or more predefined modes of operation for the microgrid may comprise a mode in which the power supplies to those loads having a priority value less that a predetermined threshold value are turned off.

The step of re-connecting may be performed such that, in the relocated microgrid, the microgrid modules are connected together in a different configuration compared to how those microgrid modules were connected together at the initial location.

The power source module may be a power source selected form the group of power sources consisting of: a generator, a diesel generator, a renewable power source, a solar panel, a wind turbine.

In a further aspect, the present application provides modular apparatus comprising: a power source module; a power storage module switchable between operating as a further power source and a power store; and a load module. The modules are changeable between being in a first state and a second state. The first state of the modules is a state wherein the modules are connected together so as to form a microgrid, the microgrid being such that the power storage module may receive power from the power source module, and the load module may receive power from the power source module and the power storage module. The second state of the modules is a state wherein the modules are connected together so as to form at least two disconnected sub-assemblies, and each module is moveable from a first respective location to a second respective location, the first location for a module being different to the second location for that module.

The power source module may be configured to be transportable using a vehicle. The power storage module may be configured to be transportable using a vehicle. The load module may be configured to be transportable using a vehicle.

### BRIEF DESCRIPTION OF THE DRAWINGS

Figure 1 is a schematic illustration (not to scale) showing an example microgrid;
Figure 2 is a schematic illustration (not to scale) of a control module;
Figure 3 is a schematic illustration (not to scale) of a demand management module; and
Figure 4 is a process flow chart showing certain steps of an embodiment of a process of controlling power distribution within the microgrid.

### DETAILED DESCRIPTION

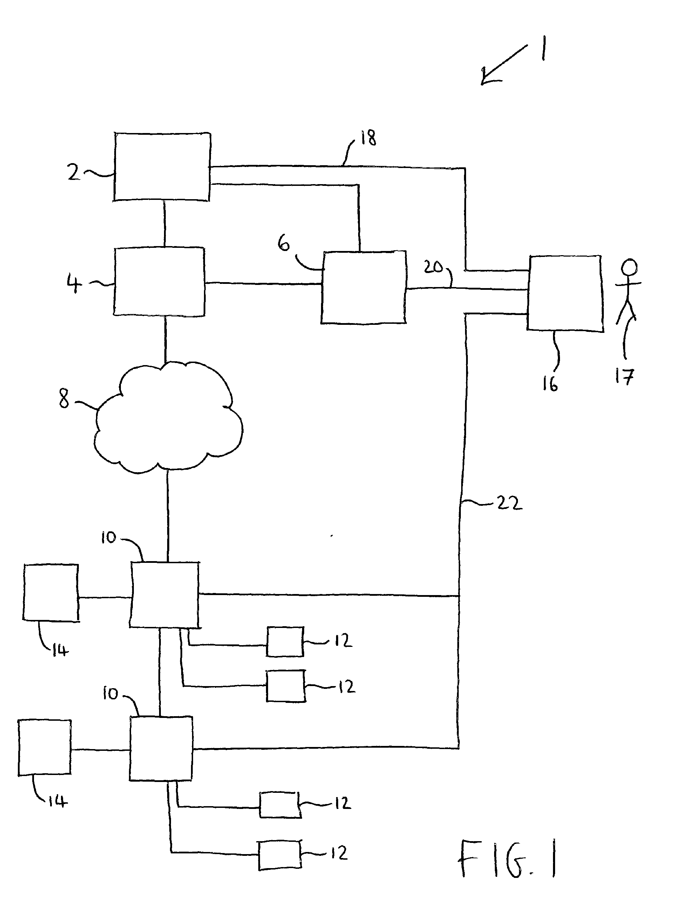

Figure 1 is a schematic illustration (not to scale) showing an example microgrid 1 in which an embodiment of a method of controlling power distribution within a microgrid is to be implemented.

In this embodiment, the microgrid 1 is a network comprising electricity generation modules, energy storage modules, and load modules.

In this embodiment, the microgrid 1 is isolated (i.e. disconnected) from a main, or centralized, power grid (e.g. a national grid). In other words, each entity 2 - 16 within the microgrid 1 is not connected to a main, or centralised, power grid (i.e. a macrogrid). However, in other embodiments, the microgrid 1 is not isolated from a main power grid.

In this embodiment, the microgrid 1 comprises a generator 2, a microgrid switch 4, a control module 6, a distribution network 8, a plurality of distribution units 10, a plurality of loads 12, a plurality of renewable energy sources 14, a demand management module 16, and an operator 17.

In this embodiment the generator 2 is a diesel generator capable of generating 350 - 400kVA of power. However, in other embodiments, the generator 2 is a different type of power source, such as a renewable source of power such as a wind-turbine or solar panel. In this embodiment, the microgrid 1 further comprises further power sources in addition to the generator 2, namely the plurality of renewable energy sources 14 which are described in more detail later below. However, in other embodiments, the microgrid 1 comprises no or only one additional power source.

In this embodiment the generator 2 is operable to switch between two modes of operation, namely an "on" mode (in which power is generated by the generator 2) and an "off" mode (in no power is generated by the generator 2). In this embodiment, as described in more detail later below, the generator 2 may switch between modes in response to receiving a control signal or configuration signal.

In this embodiment, the generator 2 is connected to the microgrid switch 4 via a hard-wired connection such that power generated by the generator 2 is sent from the generator 2 to the microgrid switch 4. In other embodiments, the generator 2 is connected to a different entity within the microgrid 1.

In this embodiment, the generator 2 is also connected to the control module 6 such that information (e.g. a control signal or configuration signal including, for example, an instruction for the generator 2 to operate in a particular mode) may be sent between the control module 6 and the generator 2.

In this embodiment, the generator 2 is also connected to the demand management module 16 such that information may be sent between the generator 2 and the demand management module 16.

In this embodiment, the generator 2 is a "mobile generator". The generator 2 can be disconnected from the microgrid 1 and subsequently moved from one location to a different location with relative ease. For example, the generator may form part of a microgrid that is located at a first location. The generator 2 is such that it may be disconnected from the microgrid at the first location and moved from the first location to a second location. The generator 2 may then be connected to other entities to form a microgrid at the second location. In some embodiments, the generator 2 is mounted onto a wheeled chassis such that the generator 2 may be coupled to a vehicle and towed from one location to a different location.

In addition to being connected to the generator 2, the microgrid switch 4 is further connected to the control module 6 and the distribution network 8.

The coupling between the microgrid switch 4 and the control module 6 is such that electrical power may be sent from the microgrid switch 4 to the control module 6 and vice versa. Also, the coupling between the microgrid switch 4 and the control module 6 is such that information (e.g. a control signal or configuration signal including, for example, an instruction for the microgrid switch 4 to operate in a particular mode) may be sent between the control module 6 and the microgrid switch 4.

The coupling between the microgrid switch 4 and the distribution network 8 is such that electrical power may be sent from the microgrid switch 4 to the distribution network 8 and vice versa.

In this embodiment, the microgrid switch 4 has a number of different operating modes. In this embodiment, as described in more detail later below, the microgrid switch 4 may switch between operating modes in response to receiving a control signal or configuration signal. In a first operating mode, the microgrid switch 4 directs all power received from the generator 2 to the control module 6. In a second mode of operation, the microgrid switch 4 directs some of the power received from the generator 2 to the control module 6 and some of the power received from the generator 2 to the distribution network 8. In a third operating mode, the microgrid switch 4 directs all power received from the generator 2 to the distribution network 8. In a fourth operating mode, the microgrid switch 4 receives power from the control module 6, and directs this power to the distribution network 8. In a fifth operating mode, the microgrid switch 4 receives power from the distribution network 8, and directs this power to the control module 6.

In this embodiment, the microgrid switch 4 is a "mobile switch". The microgrid switch 4 can be disconnected from the microgrid 1 and subsequently moved from one location to a different location with relative ease. For example, the microgrid switch 4 may form part of a microgrid that is located at a first location. The microgrid switch 4 is such that it may be disconnected from the microgrid at the first location and moved from the first location to a second location. The microgrid switch 4 may then be connected to other entities to form a microgrid at the second location. In some embodiments, the microgrid switch 4 is provided by apparatus that may be loaded into a vehicle and transported from one location to a different location.

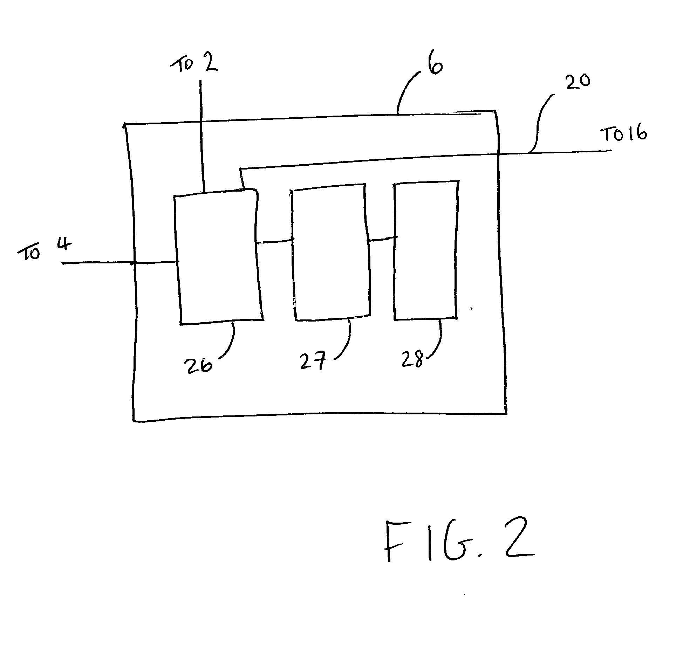

The control module 6 is described in more detail later below with reference to Figure 2. In addition to being connected to the microgrid switch 4, the control module 6 is connected to the demand management module 14 such that information may be sent between the control module 6 and the demand management module 16.

As described in more detail later below, in this embodiment the control module 6 is operable to switch between two modes of operation, namely a first mode (in which power is received and stored by the control module 6) and a second mode (in which power that has been stored in the control module 6 is supplied by the control module 6).

In this embodiment, the distribution network 8 is a network via which electrical power is sent between the microgrid switch 4 and the distribution units 10.

In this embodiment, the microgrid 1 comprises two distribution units 10. In this embodiment, a first distribution unit 10 is directly connected (i.e. with no intervening microgrid module) to the distribution network 8. A second distribution unit 10 is connected to the distribution network 8 via the first distribution unit 10. In other embodiments, the microgrid 1 may include a different number of distribution units arranged in any appropriate way. For example, in other embodiments, any number of distribution units may be directly connected to the distribution network. Also for example, any number of distribution units may be connected to the distribution network via any number of other distribution units.

In this embodiment, each distribution unit 10 is connected to a plurality of loads 12. In particular, in this embodiment, each of the distribution units 10 comprises a plurality of sockets, and each load 12 is plugged into a socket of a distribution unit 10. Also, in this embodiment, the second distribution unit 10 is connected, or plugged into, a socket of the first distribution unit 10. The sockets of a distribution unit 10 are operable to switch between two modes of operation, namely an "on" mode (in which power is supplied to the entity connected to, or plugged into, that socket) and an "off" mode (in which power is supplied to the entity connected to, or plugged into, that socket).

Each distribution unit 10 is configured to redistribute power received by that distribution unit 10 to some or all of the entities (e.g. loads 12 or other distribution units 10) connected to that distribution unit 10.

In this embodiment, the distribution units 10 are "mobile distribution units 10". The distribution units 10 can be disconnected from the microgrid 1 and subsequently moved from one location to a different location with relative ease. For example, the distribution units 10 may form part of a microgrid that is located at a first location. The distribution units 10 are such that they may be disconnected from the microgrid at the first location and moved from the first location to a second location. The distribution units 10 may then be connected to other entities to form a microgrid at the second location. In some embodiments, the distribution units 10 may include a housing in which are housed a plurality of metered sockets into which the loads 12 are plugged. The housing of a distribution unit may of such a size that it may be coupled to, or loaded into, a vehicle and transported from one location to a different location.

Each of the loads 12 consumes power distributed to it from the distribution unit 10 to which that load 12 is connected. In this embodiment, each of the loads 12 is associated with a respective demand level indicative of the amount of power that load 12 requires to function.

In this embodiment, the loads 12 are "mobile loads". The loads 12 can be disconnected from the microgrid 1 and subsequently moved from one location to a different location with relative ease. For example, the loads 12 may form part of a microgrid that is located at a first location. The loads 12 are such that they may be disconnected from the microgrid at the first location and moved from the first location to a second location. The loads 12 may then be connected to other entities to form a microgrid at the second location. In some embodiments, the loads 12 are such they may be loaded into a vehicle and transported from one location to a different location.

In this embodiment, each distribution unit 10 is connected to a renewable energy source 14. Each distribution unit 10 is configured to receive electrical power generated by the renewable energy source 14 connected to that distribution unit 10. This power may be redistributed throughout the microgrid 1. For example, a distribution unit 10 may send the power generated by a renewable resource 14 to the distribution network 8 where it may be redistributed, for example, to the control module 6. In other embodiments, one or more of the distribution units 10 are connected to a different number of renewable energy sources 14 such as zero renewable energy sources, or a plurality of renewable energy sources. In other embodiments, one or more of the renewable energy sources 14 are a different type of energy source e.g. a non-renewable energy source. In other embodiments, one or more of the renewable energy sources 14 are connected to the rest of the microgrid 1 in a different way e.g. not via a distribution unit 10, e.g. via the distribution network 8.

In this embodiment, the renewable energy sources 14 are "mobile renewable energy sources". The renewable energy source 14 can be disconnected from the microgrid 1 and subsequently moved from one location to a different location with relative ease. For example, the renewable energy sources 14 may form part of a microgrid that is located at a first location. The renewable energy sources 14 are such that they may be disconnected from the microgrid at the first location and moved from the first location to a second location. The renewable energy sources 14 may then be connected to other entities to form a microgrid at the second location. In some embodiments, the renewable energy sources 14 are such they may be loaded into a vehicle and transported from one location to a different location.

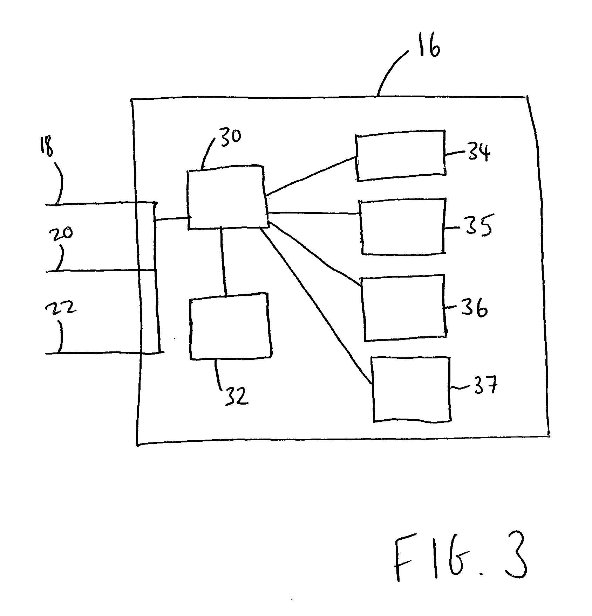

The demand management module 16 and its functionality is described in more detail later below with reference to Figure 3. In this embodiment, the demand management module 16 is operated by the operator 17. The operator 17 is a human operator.

In this embodiment, the demand management module 16 is connected, via a first connection 18, to the generator 2. The first connection 18 is such that measurements of the output power of the generator 2 may be received by the demand management module 16. Also, the first connection 18 may be such that measurements of a level of fuel available to the generator 2 may be received by the demand management module 16. Any appropriate sensing apparatus may be used to take the aforementioned measurements associated with the generator 2.

Also, the demand management module 16 is connected, via a second connection 20, to the control module 16. The second connection 20 is such that measurements of the power received by the control module 6, measurements of the power stored by the control module 6, and measurements of the power provided by the control module 6, may be received by the demand management module 16. Any appropriate sensing apparatus may be used to take the aforementioned measurements associated with the control module 6.

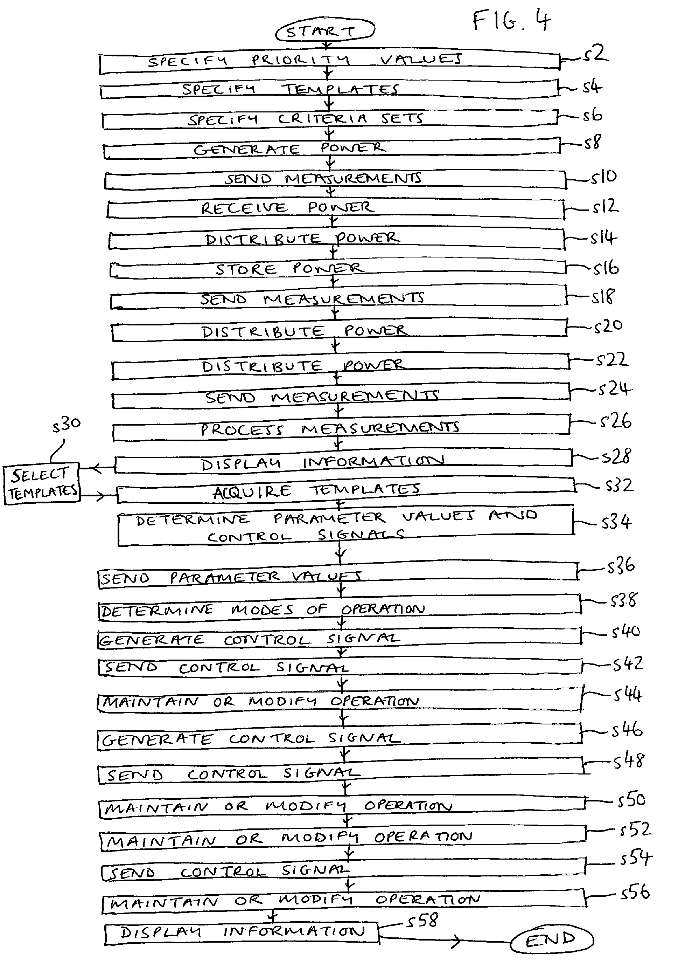

Furthermore, the second connection 20 is such that information may be sent from the demand management module 16 to the control module 6. Such information may, for example, include parameter values for use by the control module 6 as described in more detail later below with reference to Figure 4.

Also, the demand management module 16 is connected, via a third connection 22, to each of the distribution units 10. The third connection 22 is such that measurements of the power used by, or demanded by, each of the loads 12 may be received by the demand management module 16. Any appropriate sensing apparatus may be used to measure the aforementioned measurements associated with the loads 12.

Furthermore, the third connection 22 is such that a control signal may be sent between the demand management module 16 and each of the distribution units 10. Such a control signal may, for example, include an instruction for the distribution unit 10 receiving that control signal to switch one or more of its sockets from being in an on mode to being in an off mode, or vice versa.

Figure 2 is a schematic illustration (not to scale) of the control module 6 of the microgrid 1.

In this embodiment, the control module 6 comprises an inverter module 26, a battery interface module 27, and a battery module 8.

In this embodiment, the inverter module 26 comprises one or more power inverters, each of which is configured to convert an alternating current to a direct current and vice versa. The inverter module 26 is coupled to the microgrid switch 4 such that electrical power, as alternating current (AC), can be sent between the inverter module 26 and the microgrid switch 4. Also, the inverter module 26 is coupled to the battery interface module 27 such that electrical power, as direct current (DC), can be sent between the inverter module 26 and the battery interface module 27.

Also, in this embodiment, the inverter module 26 comprises one or more processing modules. The processing modules of the inverter module 26 are configured to, using parameter values received from the demand management module 16, determine a mode of operation for the control module 6 to operate in. Also, the processing modules of the inverter module 26 are configured to, using parameter values received from the demand management module 16, determine a mode of operation for the microgrid switch 4 to operate in. The processing modules of the inverter module 26 are also configured to generate a control signal for the microgrid switch 4, as described in more detail later below with reference to Figure 4. Also, the processing modules of the inverter module 26 are configured to, using parameter values received from the demand management module 16, determine a mode of operation the generator 2 to operate in. The processing modules of the inverter module 26 are also configured to generate a control signal for the generator 2, as described in more detail later below with reference to Figure 4.

In this embodiment, the battery interface module 27 is configured to act as an interface between the inverter module 26 and a battery module 8. In addition to being coupled to the inverter module 26, the battery interface module 27 is coupled to the battery module 28 such that electrical power, as direct current (DC), can be sent between the battery interface module 27 and the battery module 28.

In this embodiment, the battery module 26 comprises one or more batteries. The batteries of the battery module 28 are configured such that power received by the battery module 28 from the battery module interface 27 (in the form of a direct current) is stored by one or more of those batteries. Also, the batteries of the battery module 28 are configured such that power stored by those batteries may be supplied to the inverter module 26, via the battery module interface 27, in the form of a direct current.

In this embodiment, the control module 6 has two modes of operation. In this embodiment, the inverter module 26 of the control module 6 determines, using information received from the demand management module 16, which of its two modes of operation the control module 6 is to operate in. In a first mode of operation, an alternating current is received by the inverter module 26 of the control module 6, converted to a direct current by the inverter module 26, and stored by the battery module 28. Thus, the batteries of the battery module 28 may act as a load. In a second mode of operation, power (in the form of a direct current) is supplied by one or more of the batteries of the battery module 28 to the inverter module 26 (via the battery interface module 27), converted to an alternating current by the inverter module 26, and supplied by the inverter module 26 to the microgrid switch 4. Thus, the batteries of the battery module 28 may act as a power source.

In this embodiment, the battery module 28 is able to store approximately 185kWh of energy.

In this embodiment, the inverter module 26 is connected to the demand management module 16. This connection is such that the inverter module 26 may send a measurement of the power stored by the battery module 28 to the demand management module 16. Also, this connection is such that the inverter module 26 may send a measurement of the remaining storage capacity of the battery module 28 to the demand management module 16.

In this embodiment, the control module 6 is cooled by a cooling unit (not shown in the Figures), e.g. a 15kW cooling unit.

In this embodiment, the control module 6 is a "mobile control module". The control module 6 can be disconnected from the microgrid 1 and subsequently moved from one location to a different location with relative ease. For example, the control module 6 may form part of a microgrid that is located at a first location. The control module 6 is such that it may be disconnected from the microgrid at the first location, and moved from the first location to a second location. The control module 6 may then be connected to other entities to form a microgrid at the second location. In some embodiments, the batteries of the battery module 28 are mounted into racks that may be loaded into, or towed by, a vehicle for transportation. Also, in some embodiments, the modules 26, 27, 28 of the storage may be such that they may easily be connected together and de-connected from each other. This tends to facilitate the transportation of the control module 6 from one location to another location.

Figure 3 is a schematic illustration (not to scale) of the demand management module 16 of the microgrid 1.

In this embodiment, the demand management module 16 comprises a processor 30, a software module 32, a user interface 34, a database 35, a configuration file 36, and a data log 37.

In this embodiment, the processor 30 is connected, via the first connection 18, to the generator 2. This connection is such that the processor 30 may receive information (such as a measurement or status) from the generator 2.

Also, the processor 30 connected, via the second connection 20, to the inverter module 26 of the control module 6. This connection is such that the processor 30 may receive information (such as a measurement or status) from the inverter module 26. In operation, as described in more detail later below with reference to Figure 4, the processor 30 receives inputs from other entities within the microgrid 1, processes those inputs, and outputs *inter alia* parameter values for use by the inverter module 26. The processor 30 is connected to the inverter module 26 such that the parameter values determined by the processor 30 may be sent to the inverter module 26.

Also, the processor 30 connected, via the third connection 22, to the distribution units 10. This connection is such that the processor 30 may receive information (such as a measurement or status) from the distribution units 10. In operation, as described in more detail later below with reference to Figure 4, the processor 30 receives inputs from other entities within the microgrid 1, processes those inputs, and determines a control signal for one or more of the distribution units 10. The processor 30 is connected to the distribution units 10 such that control signals determined by the processor 30 may be sent to the distribution units 10.

As described in more detail later below with reference to Figure 4, in some embodiments, the parameter values and the control signals determined by the processor 30 are dependent upon an input of the operator 17 to the user interface 34. In other embodiments, the parameter values and the control signals determined by the processor 30 are not dependent upon an input of the operator 17.

The processor 30 is further connected to the software module 32 such that software stored in the software module 32 may be acquired by the processor 30.

The processor 30 is further connected to the user interface 34 such that information may be sent between the processor 30 and the user interface 34. The user interface 34 may be used, by the operator 17, to input information into the demand management module 16, for example, for use by the processor 30. Also, the user interface 34 may present (e.g. display), to the operator 17, information sent to the user interface 34 by the processor 30 (such as states or statuses for entities within the microgrid 1, parameters relating to current power distribution within the microgrid 1 etc.). The user interface 34 may be any appropriate user interface, for example, the user interface 34 may include a display, a graphical user interface (GUI) displayed on the display, a mouse controller, and a keyboard.

The processor 30 is further connected to the database 35 such that information may be sent between the processor 30 and the database 35. In this embodiment, the database 35 contains a digital model of the microgrid 1. This model may include a list of the various entities or modules that form the microgrid 1, an address (e.g. an IP address) for each microgrid entity or module, and a specification of the connections between the entities of the microgrid. The digital model of the microgrid 1 stored in the database 35 may be acquired by the processor 30.

The processor 30 is further connected to the configuration file 36 such that information may be sent between the processor 30 and the configuration file 36. In this embodiment, configuration file 36 contains information including, but not limited to, a name or identifier of the microgrid installation, contact details for a helpdesk, acceptable data ranges for various microgrid parameters, default values for various microgrid parameters (e.g. generator parameters), etc. The information in the configuration file may be acquired by the processor 30 e.g. for processing by the processor 30 and/or for displaying on the user interface 34 to the operator 17.

The processor 30 is further connected to the data log 37 such that information may be sent between the processor 30 and the data log 37. In operation, the processor 30 sends data, including inputs to the processor 30 (i.e. measurements received by the processor 30 via the connections 18, 20, 22) and/or outputs of the processor 30, to the data log 37 to be stored. The data stored in the data log 37 may, for example, be used in the performance of diagnostic or prognostic processes performed, for example, by the processor 30. Data stored in the data log 37 may be acquired by the processor 30 e.g. for processing by the processor 30 and/or for displaying on the user interface 34 to the operator 17.

In this embodiment, the demand management module 16 is a "mobile management module". The demand management module 16 can be disconnected from the microgrid 1 and subsequently moved from one location to a different location with relative ease. For example, the demand management module 16 may form part of a microgrid that is located at a first location. The demand management module 16 is such that it may be disconnected from the microgrid at the first location and moved from the first location to a second location. The demand management module 16 may then be connected to other entities to form a microgrid at the second location. In some embodiments, the demand management module 16 is provided by apparatus, e.g. a computer that may be loaded into a vehicle and transported from one location to a different location. In some embodiments, the demand management module 16 is coupled to other entities of a microgrid via, for example, the Internet. Thus, in some embodiments, the demand management module may be connected to a first microgrid, the first microgrid being located at a first location. The demand management module may then be disconnected from the first microgrid and reconnected to a second microgrid, the second microgrid being at a second location.

Apparatus, including the demand management module 16, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowchart of Figure 4 and described below may be omitted or such process steps may be performed in differing order to that presented below and shown in Figure 4. Furthermore, although all the process steps have, for convenience and ease of understanding, been depicted as discrete temporally-sequential steps, nevertheless some of the process steps may in fact be performed simultaneously or at least overlapping to some extent temporally.

Figure 4 is a process flow chart showing certain steps of an embodiment of a process of controlling power distribution within the microgrid 1.

At step s2, for each load 12, the operator 17 specifies a "priority value". In this embodiment, a priority value for a given load 12 is indicative of how important the operator 17 deems that load 12 to be (i.e. how important it is for that load 12 to receive power when power is demanded by that load 12). For example, a load 12 that is deemed to be important (i.e. a load 12 that the operator 17 deems it to be important that power is supplied to that load 12 when power is demanded by that load 12) may be assigned a priority value of "1 ". A load 12 that is deemed to be less important than a load 12 that been assigned a priority value of "1" may, for example, be assigned a priority value of "2", and so on.

In this embodiment, the priority values are input into the demand management module 16 by the operator 17 using the user interface 34. The input priority values are stored, for example, in the data log 37, such that they may be acquired by the processor 30. In other embodiments, one or more of the priority values are specified or determined in a different way.

At step s4, the operator 17 specifies one or more "operational templates" (hereinafter referred to as "templates"). In this embodiment, a template specifies how one or more entities or modules within the microgrid 1 are to operate. In other words, each template specifies a mode of operation for one or more of the entities within the microgrid 1. A template may be considered to be a "preset" mode of operation for one or more of the entities within the microgrid 1.

A first example template specifies that, whilst the generator 2 is turned on, the generator 2 is to run at maximum output to supply power to the loads 12. The first example template also specifies that any excess power generated by the generator 2 is to be stored by the battery module 28 until the batteries of the battery module 28 have been charged to a first predetermined threshold level (e.g. 80% of capacity). The first example template also specifies that, once the batteries of the battery module 28 have been charged to the first predetermined threshold level, the generator 2 is to be turned off and power is to be supplied to the loads 12 from the batteries. The first example template also specifies that, whilst the generator 2 is turned off, power is supplied by the batteries of the battery module 28 to the loads 12 until the batteries have a charge level equal to a second predetermined threshold level (e.g. 40% of capacity). The first example template also specifies that, once the batteries of the battery module 28 have a charge level equal to a second predetermined threshold level, the generator 2 is to be turned back on, and so on.

A second example template specifies that the generator 2 is to be run at maximum output to supply power to the loads 12 and the batteries of the battery module 28, even if the batteries are fully charged. This may, for example, be useful in situations where it is important that power is supplied to the loads 12, and generator fuel level is less of a concern.

A third example template specifies that power to the loads 12 is to be provided by the batteries 28 and not the generator 2. This may, for example be useful in situations in which the generator 2 is not functioning or fuel for the generator is low.

In some embodiments, any or all of the templates may further specify that certain loads 12 (e.g. loads having a priority level below a priority level threshold value) are to be "shed", i.e. turned off or not to be supplied with power. For example, it may be specified that certain loads 12 are to be shed if a signal indicating that the generator 2 may be overloaded is received (e.g. from the generator 2) by the demand management module 16. Also for example, it may be specified that certain loads 12 are to be shed at a certain time of day, or day of the week etc.

Also, any or all of the templates may further specify efficiency routines for any or all of the entities within the microgrid 1.

In this embodiment, the templates are input into the demand management module 16 by the operator 17 using the user interface 34. The input templates are stored in the data log 37such that they may be acquired by the processor 30. In other embodiments, one or more of the templates are specified or determined in a different way.

At step s6, for each template specified at step s4, the operator 17 may specify a set of criteria. In some embodiments, a set of criteria for a template comprises one or more criteria that have to be fulfilled in order for that template to be selected.

A set of criteria corresponding to a template may comprise parameter values (e.g. fuel levels, power levels etc.) or states (e.g. "on", "off", etc.) for any of all of the entities within the microgrid 1.

In this embodiment, the sets of criteria associated with the templates are input into the demand management module 16 by the operator 17 using the user interface 34. Each set of criteria is stored in the database 35 alongside the template to which that set of criteria corresponds. The sets of criteria are stored in the data log 37such that they may be acquired by the processor 30. In other embodiments, one or more criterion is specified or determined in a different way.

At step s8, in this embodiment, the generator 2 generates power. The generated power is output from the generator 2.

At step s10, a measurement of the power output from the generator 2 is sent, via the first connection 18, to the processor 30 of the demand management module 16. A measurement of the fuel level for the generator 2 is also sent, via the first connection 18, to the processor 30 of the demand management module 16.

At step s12, the power output from the generator 2 is received by the microgrid switch 4.

At step s14, depending on the current operating mode of the microgrid switch 4, either all of the power received by the microgrid switch 4 is sent to the distribution network 8, all of the power received by the microgrid switch 4 is sent to the control module 6, or power is sent to both the distribution network 8 and the control module 6. In this embodiment, at step s14, the power received by the microgrid switch 4 is distributed to both the distribution network 8 and the control module 6.

A signal indicative of the operating mode of the microgrid switch 4 may also be sent to the processor 30 of the demand management module 16, e.g. via the control module 6 and the second connection 20.

At step s16, in this embodiment, the control module 26 stores the power received from the microgrid switch 4 in the batteries of the battery module 28.

In particular, in this embodiment, an alternating current received by the inverter module 26 of the control module 6 is converted to a direct current. This direct current is sent, from the inverter module 26, via the battery interface module 27, to the battery module 28. The power received by the battery module 28 is stored in the batteries of the battery module 18.

At step s18, the inverter module 26 sends a measurement of the power stored in the battery module 28, and/or the remaining storage capacity of the battery module 28, via the second connection 20, to the processor 30.

At step s20, in this embodiment, the distribution network 8 distributes the power received by it to the distribution units 10 connected to the distribution network 8. In this embodiment, power is distributed to the distribution units 10 such that the power demands of the loads 12 connected to each of the distribution units 10 are satisfied.

At step s22, in this embodiment, each of the distribution units 10 distributes power received by them to the loads 12 connected to that distribution unit 10. In this embodiment, this is performed such that the power demand of each of the loads 12 is satisfied.

At step s24, the distribution units 10 send measurements of the power demands of the loads 12, and/or the power consumed by the loads 12, via the third connection 22, to the processor 30.

In some embodiments, one or more of the renewable power sources 14 also generate power. This power may be distributed within the microgrid 1 in any appropriate way. Measurements of the power generated by the renewable resources 14, and measurements of how that power is distributed throughout the microgrid 1, may also be sent to the processor 30 of the demand management module 16.

At step s26, the processor 30 of the demand management module 16 processes the measurements/signals received from the generator 2, the control module 6, and the distribution units 10. This processing is performed to determine a current state of the microgrid 1. The processing performed at step s26 may comprise the processor 30 implementing software stored in the software module 32. Also, the processing performed at step s26 may comprise the processor 30 acquiring and processing some or all of the information stored in the database 35, the configuration file 36, and/or the data log 37.

At step s28, the processor 30 displays, using the user interface 34, the processed measurements (i.e. the output of step s26) to the operator 17. Thus, the operator 17 is presented with a current state of the microgrid 1.

At step s30, based on the information displayed on the user interface 34, the operator 17 selects one or more templates from the plurality of templates stored within the data log 37. In this embodiment, the operator 17 selects those templates in accordance with which they wish the entities of the microgrid 1 to operate. The operator 17 may input, using the user interface 34, into the demand management module 16, selection information that specifies one or more of the templates.

In other embodiments, the selection of one or more of the templates is performed by a different entity i.e. other than the operator 17.

For example, in some embodiments, at step s30, the processor 30 processes the measurements received from the generator 2, the control module 6, and the distribution units 10 so as to select one or more templates stored in the data log 37. For example, in some embodiments the processor 30 compares the measurements received by it to the sets of criteria stored in the data log 37at step s6. This is performed to identify one or more sets of criteria that are satisfied. In other words, the processor 30 tests each set of criteria to identify those sets of criteria that are satisfied. The processor 30 selects the template corresponding to, or associated with, a satisfied set of criteria. The selected one or more templates specifies modes of operation for entities within the microgrid 1.

The selection of a template by the operator 17 in this embodiment, or by the processor 30 in other embodiments, is based upon current operational parameters of the entities within microgrid 1. For example, if a measurement of the power output from the generator 2, sent to the processor 30 at step s10, indicates that the generator 2 is close to overloading, and/or if a measurement of the fuel available to the generator 2 indicates a low fuel level, a template that specifies that the generator 2 is to be turned off, or controlled so as to generate less power, may be selected.

In some embodiments, a selected template specifies that certain loads 12 (e.g. loads 12 that correspond to a priority level at or below a predetermined threshold priority value) are to be shed. In some embodiments, a selected template specifies that some or all of the load demands are to be met by drawing power from the batteries of the battery module 28.

In some embodiments, the selection of a template may be dependent upon information (e.g. sensor measurements) from one or more different sources instead of or in addition to the information received from the generator 2, the control module 6, and the distribution units 10. For example, in some embodiments, a template may be selected (e.g. by the operator 17 of the processor 30) based upon a clock reading. For example, in some embodiments the operator 17 may prefer that, at certain times of the day, some entities within the microgrid 1 are to be turned off.

At step s32, the processor 30 acquires, from the data log 37, the one or more templates that have been selected. For example, using the selection information input by the operator 17 into the user interface 34, the processor 30 retrieves the selected templates from the data log 37.

At step s34, the processor 30 processes the selected one or more templates.

In this embodiment, this processing is performed by the processor 30 to determine values of one or more parameters that are for use by the inverter module 26 of the control module 6.

Also, this processing is performed by the processor 30 to determine control signals for one or more of the distribution units 10. The determined control signals for one or more of the distribution units 10 are hereinafter referred to as the "distribution unit control signals".

In this embodiment, the determined parameter values are useable by the inverter module 26 to determine a mode of operation for the generator 2, the microgrid switch 4 and/or the control module 6. Also, the determined parameter values are such that a mode of operation for a microgrid entity determined using those parameter values is the same as the mode of operation for that microgrid entity specified in the one or more selected templates.

In this embodiment, a control signal for a distribution unit 10 includes an instruction for that distribution unit 10 to turn on or off one or more of the sockets of that distribution unit 10. Also, the determined control signals are such that, were the instructions specified by those control signals implemented, the distribution units 10 would be operating in accordance with the selected one or more templates. For example, if a selected template specifies that all loads 12 corresponding to a priority level less than a threshold level are to be shed, the control signal generated by the processor 30 may include, for each load socket into which a load 12 that has a priority level less than the threshold level is connected, an instruction for that socket to be turned off.

At step s36, the processor 30 sends the determined parameter values to the inverter module 26.

At step s38, the inverter module 26 processes the received parameter values so as to determine a mode of operation for the generator 2, the microgrid switch 4 and the control module 6.

In this embodiment, the determined mode of operation for the generator 2 is such that, were the generator 2 to operate in that mode, the generator 2 would be operating in accordance with (i.e. as specified by) the one or more templates selected at step s30. Similarly, the determined mode of operation for the microgrid switch 4 is such that, were the microgrid switch 4 to operate in that mode, the microgrid switch 4 would be operating in accordance with (i.e. as specified by) the one or more templates selected at step s30. Similarly, the determined mode of operation for the control module 6 is such that, were the microgrid switch 4 to operate in that mode, the control module 6 would be operating in accordance with (i.e. as specified by) the one or more templates selected at step s30.

At step s40, the inverter module 26 generates a control signal for the generator 2, hereinafter referred to as the "generator control signal".

In this embodiment, the generator control signal includes an instruction for the generator 2 to operate in a certain one of its operational modes. Also, the generator control signal is such that, if the instructions specified by the generator control signal are implemented by the generator 2, the generator 2 would operate in accordance with the one or more templates selected at step s30.

At step s42, the processor 30 sends the generator control signal to the generator 2.

At step s44, the generator 2 receives the generator control signal and modifies or maintains its operation such that the generator 2 operates in accordance with the received control signal. Thus, at step s44, the operation of the generator 2 is modified (or maintained) such that the generator 2 operates in accordance with the one or more templates selected at step s30.

At step s46, the inverter module 26 generates a control signal for the microgrid switch 4, hereinafter referred to as the "microgrid switch control signal".

In this embodiment, the microgrid switch control signal includes an instruction for the microgrid switch 4 to operate in a certain one of its operational modes. Also, the microgrid switch control signal is such that, if the instructions specified by the microgrid switch control signal are implemented by the microgrid switch 4, the microgrid switch 4 would operate in accordance with the one or more templates selected at step s30.

At step s48, the processor 30 sends the microgrid switch control signal to the microgrid switch 4.

At step s50, the microgrid switch 4 receives the microgrid switch control signal and modifies or maintains its operation such that the microgrid switch 4 operates in accordance with the received control signal. Thus, at step s50, the operation of the microgrid switch 4 is modified (or maintained) such that the microgrid switch 4 operates in accordance with the one or more templates selected at step s30.

At step s52, the inverter module 26 modifies or maintains its operation such that the control module 6 operates in the mode of operation for the control module 6 that was determined at step s38. Thus, at step s52, the control module 6 operates in accordance with the one or more templates selected at step s30.

At step s54, the processor 30 sends the distribution unit control signals to the distribution units 10.

At step s56, each distribution unit 10 receiving a control signal modifies or maintains its operation such that that distribution unit 10 operates in accordance with the received control signal. Thus, at step s56, the operation of the distribution units 10 is modified (or maintained) such that the distribution units 10 operate in accordance with the one or more templates selected at step s30.

At step s58, the user interface 34 presents (e.g. on a display), for consumption by the operator 17, information relating to any or all of the following: current power distribution within the microgrid, operating parameters for any or all of entities within the microgrid 1, states or statuses for any or all of the entities within the microgrid 1, details of the current template in accordance with which the microgrid 1 is operating, etc. In other embodiments, different information may be presented to the operator instead of or in addition to any or all of the information presented in this embodiment.

Thus, a process of controlling the microgrid 1 is provided.

In some embodiments, the inverter module of the control module controls the generator and the microgrid switch so as to charge the batteries within the control module. The inverter module may switch the generator off when the batteries are fully charged (or charged to some other predetermined level, e.g. 80%). The inverter module may then control the microgrid switch such that power is directed, from the batteries of the control module, to the loads of the microgrid. Thus, power on demand can be drawn from the control module. This advantageously tends to result in increased efficiency as well as fuel and maintenance cost savings.

In some embodiments, entities within the microgrid are controlled automatically, e.g. a template in accordance with which the microgrid is to operate may be selected automatically by the processor of the demand management module. This automatic management of power distribution within the microgrid advantageously tends to be relatively efficient (e.g. compared to conventional power management techniques). In particular, the above described systems and methods advantageously tend to reduce fuel consumption and/or maintenance costs compared to conventional systems and methods. Furthermore, the automatic control of the microgrid avoids a need for a human operator.

The above described systems and methods advantageously tend to provide for "plug-in-and-go" power management. For example, it tends to be possible and relatively easy to connect the above described management module into an established microgrid so as to provide that a microgrid with the above described functionality. Furthermore, it tends to be possible and relatively easy to extend the microgrid, e.g. by connecting further modules (such as further power sources such as generators or renewable power sources, further distribution networks, further distribution units, and further loads) to an existing microgrid, and to manage power distribution (automatically or manually) within that extended microgrid using the demand management module.

In the above embodiments, the modules of the microgrid are "ruggedized". For example, the demand management module may be provided by a "rugged" computer. The term "ruggedized" is used herein to refer to a system that has been specifically designed to reliably operate in harsh usage environments and conditions, such as strong vibrations, extreme temperatures and wet or dusty conditions. A ruggedized system may be a system that conforms to any appropriate ruggedization standard such as MIL-STD-810, MIL-S-901, IEEE 1156.1-1993, IEEE 1613, IP (Ingress Protection), IS (Intrinsic Safety), ATEX, NEMA (National Electrical Manufacturers Association), IK Code, and European norm EN50155. Ruggedized systems advantageously tend to survive off-road delivery. Furthermore, the ruggedized modules of the microgrid are "weather-proofed", thereby to enable the microgrid to be set-up, or deployed, outside, even in adverse weather conditions.

Also, in the above embodiments, the microgrid modules are adapted to be transportable by vehicle. For example, one or more of the microgrid modules may be built into a frame which is adapted to be lifted by a forklift truck. This tends to facilitate the movement and deployment of the microgrid.

Also, in the above embodiments, each microgrid module is a pre-wired, independent module. Thus, when deploying the microgrid, wiring for a microgrid module tends not to be required. Instead, the microgrid modules may be easily connected together using conventional, commercial connections.

The above described systems and methods tend to be advantageously flexible, e.g. such that different types of power source (e.g. commercial generators, a national grid, batteries, solar power, wind power etc.), and different types of load (e.g. lighting, heating, air conditioning, and loads having different levels of importance or priority), may be accommodated for.

In other words, the above described system is modular and allows for the addition of further equipment/modules to the microgrid, and for the removal of existing equipment/modules from the microgrid, whilst providing efficient power distribution and management throughout the microgrid. In other words, the above described system and method is modular and scalable.

Furthermore, advantageously, each of the modules/entities of the microgrid is such that it may be disconnected from the other entities within the microgrid, and moved from one location to a different location. Thus, a microgrid that is deployed at a first location, may be separated (i.e. disconnected) into a plurality of separate modules. The separate modules may then be transported from the first location to a second location. The microgrid modules may then be reconnected to one another, in any appropriate configuration, to form a microgrid at the second location.

In the above systems and methods, an energy management system that controls generators, maintains storage and intelligently manages power demand is advantageously implemented to meet operational requirements and energy use patterns within a microgrid.

Advantageously, the demand management module (and the operator operating the demand management module) may be located remotely (e.g. in a different country) to other microgrid entities. Thus, the above described methods and apparatus advantageously tend to allow for the remote (and either automatic or manual) management of power distribution within a microgrid, and/or remote control of the entities within the microgrid. The remote system monitoring and optimisation provided by the above described systems and apparatus advantageously allows for a reducing of the training burden on personnel local to the microgrid.

The above described methods and apparatus tend to be particularly beneficial when used in situations where power from a main grid is not available. This is because, in these situations, power sources may be limited, or unreliable, and the improvement inefficiency provided by the above described systems and methods tend to alleviate problems caused by having limited or unreliable power sources.

Advantageously, system and performance data from any or all of the entities/modules within the microgrid may be presented to the operator (e.g. by sending that data to the demand management module, and displaying that data using the user interface). Equipment condition data may also be presented to the operator in this way. The operator may manually control some or all entities within the microgrid depending upon this displayed data, or any other data.

Advantageously, it tends to be relatively simple to integrate renewable power sources, such as photovoltaic or wind power, into a microgrid, and manage that resource as described above. Such power sources may, for example, be connected to a microgrid at any point on that microgrid.

Real time load monitoring advantageously tends to be provided by the above described systems and apparatus.

Also, power supplies to critical systems may be prioritised over systems that are deemed to be less important. This is provided, in the above embodiments, by assigning priority values to each load or groups of loads. Loads may be shed (i.e. power to loads may be turned off) based on any appropriate information (e.g. timer information) to deliver further power efficiencies, or to reduce or eliminate the likelihood of generator overloads.

In the above embodiments, the power distribution management system and method is implemented in the microgrid described in more details above and shown in Figure 1. However, in other embodiments, the power distribution management system and method is implemented in a different appropriate microgrid. For example, in other embodiments, the microgrid may comprise a different number of microgrid switches, a different number of control modules, a different number of distribution networks, a different number of distribution units, a different number of loads, and/or a different number of power sources. The entities of the microgrid may be connected together in any appropriate way that may, for example, be different to that described above and shown in Figure 1.

In the above embodiments, the operator specifies priority levels for each of the load sockets within the microgrid. However, in other embodiments, priority levels may be specified for any or all of the other microgrid entities instead of or in addition to priority levels for each of the load sockets. These priority levels may be used to determine how power is to be distributed within the microgrid. Also, in other embodiments, one or more priority level may be specified in a different way (i.e. not by the operator). For example, in other embodiments, the processor of the demand management module may determine a priority level for a load socket based upon any appropriate information or measurement. In some embodiments, no priority values are specified, and priority levels are not used to determine how power is to be distributed within the microgrid.

In the above embodiments, the operator specifies templates in accordance with which the microgrid may operate. The operator may also specify a criteria set for each template that may be used to select a template. However, in other embodiments, one or more templates and/or one or more criteria within a set of criteria may be specified in a different way (i.e. not by the operator). For example, in other embodiments, the processor of the demand management system may determine a template and/or criterion.

In the above embodiments, one or more templates are selected and the entities within the microgrid are controlled such that they operate in accordance with the selected templates. However, in other embodiments, templates are not used. For example, in some embodiments, using measurements/information taken from entities within the microgrid, the operator may determine, e.g. based on expert knowledge or experience, how power is to be distributed within the microgrid and control the operation of the microgrid entities accordingly (using the demand management module). Also for example, in some embodiments, a plurality of "IF-THEN" rules may be provided (e.g. specified by the operator) and used to determine how the entities of the microgrid are to operate, e.g. the operator or processor may determine that IF a measurement satisfies some requirement, THEN a certain action is to be performed (e.g. a particular control signal is to be sent to a particular microgrid entity).

In some embodiments, the operator or processor implements a different type of decision making process to determine how microgrid entities are to operate. This decision making process may utilise some or all of the information measured from the microgrid and/or some or all of the information provided by the operator. Examples of appropriate decision making techniques include, but are not limited to, fuzzy inference decision making techniques, Bayesian microgrid based decision making techniques, and neural microgrid based decision making techniques.

## Claims

1. A method of operating a microgrid (1), the method comprising:
providing a microgrid (1), wherein:
the microgrid comprises a power source module (2), a power storage module (6), and a load module (12);
each of the microgrid modules is located at a respective first location;
the power storage module (6) is switchable between operating as a further power source and a power store;
the power storage module (6) is coupled to the power source module (2) such that the power storage module (6) may receive power from the power source module (2) ; and
the load module (12) is coupled to the power source module (2) and the power storage module (6) such that the load module (12) may receive power from the power source module (2) and the power storage module (6);
disconnecting at least one module from the microgrid (1), thereby producing at least two microgrid sub-assemblies;
thereafter, moving each of the microgrid modules from the first location of that microgrid module to a respective second location, the second location for a microgrid module being different to the first location for that microgrid module; and
thereafter, re-connecting the at least two microgrid sub-assemblies so as to produce a relocated microgrid (1).

2. A method according to claim 1, wherein:
the provided microgrid (1) further comprises a management module (16) coupled to the power source module (2), the power storage module (6), and the load module (12) such that the management module (16) may receive signals from the power source module (2), the power storage module (6), and the load module (12); and
the step of moving comprises moving at least the power source module (2), the power storage module (6), and the load module (12).

3. A method according to claim 2, wherein the step of moving comprises maintaining the location of the management module (16) such that it remains at its first location.

4. A method according to claim 2, wherein the step of moving comprises moving the management module (16) from a first location for the management module (16) to a second location for the management module (16).

5. A method according to any of claims 1 to 4, wherein the step of disconnecting is performed such that each microgrid module is disconnected from each other microgrid module.

6. A method according to any of claims 1 to 5, wherein the step of moving comprises:
for each microgrid module, coupling that microgrid module to a vehicle; and
for each microgrid module, transporting, using the vehicle to which that microgrid module is coupled, that microgrid module.

7. A method according to any of claims 1 to 6 when dependent on claim 2, the method further comprising, when the microgrid (1) is in its initial and/or relocated state, controlling power distribution within the microgrid (1), wherein controlling power distribution within the microgrid (1) comprises:
providing, for use by the management module (16), one or more predefined modes of operation for the microgrid (1), a predefined mode of operation specifying an operational mode for one or more microgrid modules;
receiving, by the management module (16), one or more signals, each of the received signals specifying an operational parameter of one or more of the microgrid modules;
using the received one or more signals, selecting a predefined mode of operation for the microgrid (1); and
for each microgrid module for which an operational mode is specified in the selected predefined mode of operation, controlling that microgrid module such that it operates as specified by the selected predefined mode of operation.

8. A method according to claim 7, wherein the step of selecting is performed by a processor (30) of the management module (16).

9. A method according to claim 7 or 8, wherein:
the method further comprises providing, for each predefined mode of operation for the microgrid (1), a set comprising one or more criteria; and
the step of selecting a predefined mode of operation for the microgrid (1) comprises:
identifying a set of criteria each criterion in which is satisfied by the received one or more signals; and
selecting, as the selected predefined mode of operation, a predefined mode of operation that corresponds to the identified set of criteria.

10. A method according to any of claims 1 to 9 when dependent on claim 2, wherein:
the load module (12) comprises a plurality of loads;
the method further comprises, when the microgrid (1) is in its initial and/or relocated state, controlling power distribution within the microgrid (1); and
controlling power distribution within the microgrid (1) comprises:
assigning, to each load, a priority value;
receiving, by the management module (16), one or more signals, each of the received signals specifying operational parameters of one or more microgrid entities selected from the group of microgrid entities consisting of the power source module (2), the power storage module (6), and a load; and
for each load, controlling, by the management module (16), a power supply to that load based upon the priority value assigned to that load and based upon the received one or more signals.

11. A method according to claim 10 when dependent upon any of claims 7 to 9, wherein the one or more predefined modes of operation for the microgrid (1) comprises a mode in which the power supplies to those loads having a priority value less that a predetermined threshold value are turned off.

12. A method according to any of claims 1 to 11, wherein the step of re-connecting is performed such that, in the relocated microgrid, the microgrid modules are connected together in a different configuration compared to how those microgrid modules were connected together at the initial location.

13. A method according to any of claims 1 to 12, where in the power source module (2) is a power source selected form the group of power sources consisting of: a generator, a diesel generator, a renewable power source, a solar panel, a wind turbine.

14. Modular apparatus comprising:
a power source module (2);
a power storage module (6), the power storage module (6) is switchable between operating as a further power source and a power store; and
a load module (12); wherein
the modules are changeable between being in a first state and a second state;
the first state of the modules is a state wherein the modules are connected together so as to form a microgrid (1), the microgrid being such that the power storage module (6) may receive power from the power source module (2), and the load module (12) may receive power from the power source module (2) and the power storage module (6); and
the second state of the modules is a state wherein the modules are connected together so as to form at least two disconnected sub-assemblies, and each module is moveable from a first respective location to a second respective location, the first location for a module being different to the second location for that module.

15. Modular apparatus according to claim 14, wherein the power source (2) module, the power storage module (6), and the load module (12) are each configured to be transportable using a vehicle.
